# EUROPEAN PATENT APPLICATION

(11) **EP 4 404 371 A1**
(43) Date of publication of application: **24.07.2024**
(21) Application number: 22947561.1
(22) Date of filing: 02.08.2022
(51) Int. Cl.: H01M 50/636

(54) **END CAP ASSEMBLY, BATTERY CELL, BATTERY, AND ELECTRIC APPARATUS**

(30) Priority: 20.06.2022 CN 202221530908 U
(71) Applicant: Contemporary Amperex Technology Co., Limited, Ningde, Fujian 352100 (CN)
(72) Inventor: SHANG, Zhitong, Ningde, Fujian 352100 (CN); WEN, Yaoling, Ningde, Fujian 352100 (CN)
(74) Representative: Holt, Lucy Rose
(86) International application number: PCT/CN2022/109688
(87) International publication number: WO 2023/245820

(57) **Abstract**

The present application relates to an end cap assembly (21), a battery cell (20), a battery (100), and an electric apparatus. The end cap assembly comprises an end cap (21a), a first sealing member (21b), and a second sealing member (21c). The end cap (21a) comprises a cap body (a1). The cap body (a1) comprises a cap portion (a11) and a liquid injection boss (a12), and is provided with a liquid injection hole (k) penetrating through the cap portion (a11) and the liquid injection boss (a12). The first sealing member (21b) performs blocking in the liquid injection hole (k). The second sealing member (21c) is provided with a first sealing portion (c1) and a second sealing portion (c2) that are connected to each other. The first sealing portion (c1) covers the side of the first sealing member (21b) facing away the interior of the battery cell (20). The second sealing portion (c2) is bent towards the interior of the battery cell (20) relative to the first sealing portion (c1) and is in sealed connection with the peripheral side wall (w) of the liquid injection boss (a12).

## Description

### Cross-Reference to Related Application

The present application refers to Chinese patent application no. 202221530908X, filed on June 20, 2022, and entitled "END CAP ASSEMBLY, BATTERY CELL, BATTERY, AND POWER CONSUMING DEVICE", which is incorporated herein by reference in its entirety.

### Technical Field

The present application relates to the technical field of battery manufacturing, and particularly to an end cap assembly, a battery cell, a battery, and a power consuming device.

### Background Art

Achieving energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

In the battery technology, in order to conveniently fill an electrolyte into the interior of a battery cell, an end cap of the battery cell is generally provided with a filling hole penetrating same from top to bottom, and after the electrolyte is filled, a sealing pin is used to seal the filling hole. The existing battery has the problem of low sealing reliability of the filling hole.

### Summary of the Invention

In view of the above problem, the present application provides an end cap assembly, a battery cell, a battery and a power consuming device, which can solve the problem of low sealing reliability of the filling hole.

In a first aspect, the present application provides an end cap assembly for a battery cell. The end cap assembly comprises an end cap, a first sealing member and a second sealing member. The end cap comprises a cap body. The cap body comprises a cap portion and a filling table. The cap portion has a configuration surface facing away from the interior of the battery cell, the filling table protrudes from the configuration surface, and the cap body has a filling hole penetrating the cap portion and the filling table. The first sealing member is blocked in the filling hole, and the second sealing member has a first sealing portion and a second sealing portion connected to each other. The first sealing portion covers the side of the first sealing member that faces away from the interior of the battery cell, and the second sealing portion is bent toward the interior of the battery cell relative to the first sealing portion, and is sealingly connected to an outer peripheral side wall of the filling table.

In the technical solution of the present application, the second sealing member performs a second sealing with the first sealing portion and the second sealing portion, the sealing area is large, and the sealing effect is good. Moreover, the first sealing portion and the second sealing portion are bent to form a circuitous sealing path, so that it is possible to reduce the permeation of vaporized electrolyte which will damage a welded position, thereby further improving the sealing effect.

In some embodiments, the filling table is configured to be provided with a crimping groove which is recessed toward the filling hole in a direction intersecting with a thickness direction of the cap body. The second sealing portion comprises a first crimping section and a second crimping section connected to each other, the first crimping section is connected to the first sealing portion and is bent toward the interior of the battery cell relative to the first sealing portion, and the first crimping section is sealingly connected to the outer peripheral side wall of the filling table. The second crimping section is bent toward the filling hole relative to the first crimping section, and is sealingly connected in the crimping groove. In this case, the second sealing member can be sealingly connected to a groove wall of the crimping groove, part of the outer peripheral side wall and the entire end wall, so that the sealing area between the filling table and the second sealing member is greatly improved, and the circuitous path formed by the crimping groove, the outer peripheral side wall and the end wall improves the sealing effect of the second sealing member. Moreover, the hook-shaped structure formed by the first sealing portion, the first crimping section and the second crimping section can also enhance the fixing between the second sealing member and the filling table.

In some embodiments, a side inner wall of the crimping groove arranged in the thickness direction and close to the interior of the battery cell is a first wall surface which is flush with the configuration surface. In this case, the crimping groove can be formed jointly by the boss protruding from the outer peripheral side wall of the filling table and the configuration surface without the need for providing a groove, and the formation of the crimping groove is more convenient.

In some embodiments, the cap portion is configured to be provided with an avoidance groove which is recessed toward the interior of the battery cell, a bottom surface of the avoidance groove being used as the configuration surface. The arrangement of the avoidance groove can reduce the protruding height of the filling table or even make same not protrude, so that the influence of the filling table on the outside can be reduced, and the external damage to the filling table can also be avoided. Moreover, hereinafter, when the second sealing member is being bent, the avoidance groove can provide a large operating space.

In some embodiments, a recessed depth of the crimping groove is a first dimension D1, a width of the crimping groove in the thickness direction is a second dimension D2, a side wall of the avoidance groove that is arranged opposite a groove bottom of the crimping groove in a direction perpendicular to the thickness direction is a first side wall, and a distance between the groove bottom of the crimping groove and the first side wall is a third dimension D3. D1 ≥ 0.5 mm, D2 ≥ 0.5 mm, 2 ≥ D1/D2 ≥ 0.5, and D3 ≥ 3D1. Tests have proved that where the first dimension D1, the second dimension D2 and the third dimension D3 are in the above ranges, when the second sealing member is being crimped, there is a large space for the crimping operation, facilitating the crimping of the second sealing member.

In some embodiments, the filling hole comprises a first hole section and a second hole section. The first hole section and the second hole section are provided from top to bottom in the thickness direction of the cap body, and one end of the first hole section and one of the second hole section that are close to each other are in communication with each other. The first sealing member blocks the first hole section and the second hole section. In this case, the blocking effect is better by connecting the first hole section k1 and the second hole section k2 to the first sealing member 21b in a blocked manner.

In some embodiments, the first hole section has a diameter decreasing gradually from top to bottom, the end of the second hole section that is connected to the first hole section is a first interface end, and the first interface end has a diameter equal to or greater than the minimum diameter of the first hole section. In this case, when the diameter of the first hole section gradually decreases from top to bottom, no circuitous structure will be formed, the electrolyte can flow downward smoothly under its own weight, and the electrolyte flowing from the first hole section to the second hole section can flow directly toward the interior of the battery cell, so that it is possible to reduce the probability of the electrolyte flowing along a hole wall of the second hole section and improve the filling efficiency of the electrolyte.

In some embodiments, an included angle between a hole wall of the first hole section and the thickness direction of the cap body is a first included angle α, where 0° ≤ α ≤ 45°. In this case, the hole wall of the first hole section is an inclined straight wall, which is convenient for machining. Moreover, when the first included angle α is in the range of 0° to 45°, the resistance of the hole wall of the first hole section to the electrolyte is small, so that the electrolyte entering the first hole section is easy to flow smoothly to the second hole section under its own weight, to prevent the electrolyte from sticking to the hole wall of the first hole section.

In some embodiments, the end cap further comprises a baffle, the baffle being arranged on the side of the cap body that faces the interior of the battery cell, and obstructing a flow path in which an electrolyte flows directly from the filling hole to the interior of the battery cell. In this case, the baffle can prevent the rapidly flowing electrolyte from directly impacting on the electrode assembly to damage the electrode assembly.

In some embodiments, the second sealing member comprises a hot-melt layer and a heat-conducting layer that are laminated. The hot-melt layer is located between the heat-conducting layer and the cap body, and hot-melt layer is configured to be capable of being melted when heated to sealingly connect the heat-conducting layer to the cap body. In this case, the hot-melt layer is used to bond the heat-conducting layer to the filling table (and/or the first sealing member), and the hot-melt layer has a hot-melt temperature much lower than the high temperature generated during welding, so the vaporization of the electrolyte can be alleviated or even avoided, thereby avoiding the problems of reducing the bonding strength and affecting the sealing effect due to the vaporized electrolyte penetrating the hot-melt layer.

In some embodiments, the first sealing member comprises a main body portion and a positioning portion adjacent to each other in the thickness direction of the cap body. The main body portion is sealingly fitted in the filling hole, and the positioning portion is located outside the filling hole and is lap-jointed to the surface of the cap body that faces away from the interior of the battery cell. The first sealing portion sealingly covers the positioning portion. In this way, it is possible to determine whether the first sealing member is mounted in place according to whether the positioning portion is lap-jointed to the cap body, so that the first sealing member is mounted more conveniently.

In some embodiments, the first sealing member further comprises a limiting portion located outside the filling hole, the main body portion is connected between the limiting portion and the positioning portion, and the limiting portion abuts against the surface of the cap body that faces the interior of the battery cell. After being mounted in place, the first sealing member is limited on the cap body by means of the positioning portion and the limiting portion thereof, so that it is possible to effectively prevent the first sealing member from falling off.

In a second aspect, the present application provides a battery cell, comprising a housing, an electrode assembly, and an end cap assembly in any one of the above embodiments. The housing encloses a receiving cavity having an opening, the electrode assembly is received in the receiving cavity, and the end cap covers the opening.

In a third aspect, the present application provides a battery, comprising a battery cell in the above embodiment.

In a fourth aspect, the present application provides a power consuming device, comprising a battery in the above embodiment. The battery is configured to supply electric energy.

The description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

### Brief Description of the Drawings

Various other advantages and benefits will become apparent to those of ordinary skill in the art upon reading the following detailed description of the embodiments. The accompanying drawings are merely for the purpose of illustrating some of the embodiments, and are not to be construed as limiting the present application. Moreover, like components are denoted by like reference numerals throughout the accompanying drawings. In the drawings:
FIG. 1 is a schematic diagram of a vehicle according to some embodiments of the present application;
FIG. 2 is a schematic exploded view of a battery according to some embodiments of the present application;
FIG. 3 is a schematic exploded view of a battery cell according to some embodiments of the present application;
FIG. 4 is an assembly diagram of a cap body and a first sealing member according to some embodiments of the present application;
FIG. 5 is an assembly diagram of a cap body, a first sealing member and a second sealing member according to some embodiments of the present application;
FIG. 6 is a partial cross-sectional view of a cap body according to some embodiments of the present application;
FIG. 7 is a partial cross-sectional view of a cap body according to some embodiments of the present application;
FIG. 8 is a schematic exploded view of an end cap according to some embodiments of the present application;
FIG. 9 is a schematic structural diagram of an end cap according to some embodiments of the present application;
FIG. 10 is a cross-sectional view of the end cap shown in FIG. 9;
FIG. 11 is a schematic structural diagram of a filling nozzle for use with an end cap according to some embodiments of the present application;
FIG. 12 is a schematic diagram of an end cap in a filling state according to some embodiments of the present application;
FIG. 13 is a schematic diagram of an end cap in a filling state according to some other embodiments of the present application;
FIG. 14 is a state diagram of a second sealing member according to some embodiments of the present application; and
FIG. 15 is a schematic structural diagram of a first sealing member according to some embodiments of the present application.

### Reference Signs in Detailed Description of Embodiments:

1000. Vehicle; 100. Battery; 200. Controller; 300. Motor; 10. Case; 11. First portion; 12. Second portion; 20. Battery cell; 21. End cap assembly; 21a. End cap; a1. Cap body; a11. Cap portion; s. Configuration surface; p. Avoidance groove; a12. Filling table; w. Outer peripheral side wall; h. Crimping groove; r. First wall surface; k. Filling hole; k1. First hole section; k2. Second hole section; k3. Third hole section; a2. Baffle; f. Buffer space; 21b. First sealing member; b1. Main body portion; b2. Positioning portion; b3. Limiting portion; 21c. Second sealing member; c1. First sealing portion; c2. Second sealing portion; c21. First crimping section; c22. Second crimping section; c3. Hot-melt layer; c4. Heat-conducting layer; 21d. Electrode terminal; 21e. Insulating member; 22. Housing; 23. Electrode assembly; 400. Filling nozzle; 401. Flow channel; 403. Filling port; 402. Mating surface; F. Thickness direction.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B may include: only A exists, both A and B exist, and only B exists. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the apparatus or element considered must have a particular orientation or be constructed and operated in a particular orientation, and therefore not to be construed as limiting the embodiments of the present application.

In the description of the embodiments of the present application, unless otherwise explicitly specified and defined, the technical terms such as "mount", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

The batteries are not only used in energy storage power systems such as hydroelectric power plants, thermal power plants, wind power plants and solar power plants, but also widely used in electric transportation means such as electric bicycles, electric motorcycles and electric vehicles and in many fields such as military equipment and aerospace.

The inventors have noticed that in the related art, after the filling is completed, after a first sealing is performed on the filling hole (by inserting a sealing member into the filling hole), another sealing member is usually laser welded to the outside of the filling hole to perform a second sealing. The residual electrolyte in the filling hole is likely to be vaporized and rush out of a molten pool under a high-temperature environment generated by the laser welding, causing welding defects such as pinholes and explosion points, resulting in the reduced sealing reliability of the filling hole.

In order to improve the sealing reliability of the filling hole, the applicant has found through research that it is possible to prevent the vaporized electrolyte from reaching an accessory in the welding position, thereby avoiding the welding defects caused thereby. Specifically, a circuitous sealing path is formed, to reduce the permeation of the vaporized electrolyte, while improving the sealing effect.

Based on the above considerations, in order to solve the problem of low sealing reliability of the filling hole, the inventors, after intensive research, have designed an end cap assembly, comprising an end cap, a first sealing member and a second sealing member. The end cap comprises a cap body. The cap body comprises a cap portion and a filling table. The cap portion has a configuration surface facing away from the interior of the battery cell, the filling table protrudes from the configuration surface, and the cap body has a filling hole penetrating the cap portion and the filling table. The first sealing member is blocked in the filling hole, and the second sealing member has a first sealing portion and a second sealing portion connected each other. The first sealing portion covers the side of the first sealing member that faces away from the interior of the battery cell, and the second sealing portion is bent toward the interior of the battery cell relative to the first sealing portion, and is sealingly connected to an outer peripheral side wall of the filling table. In this case, the second sealing member performs a second sealing with the first sealing portion and the second sealing portion, the sealing area is large, and the sealing effect is good. Moreover, the first sealing portion and the second sealing portion are bent to form a circuitous sealing path, further improving the sealing effect. It is possible to effectively reduce the damage of the vaporized electrolyte to the welding position.

The end cap disclosed in the embodiments of the present application may be used to prepare a battery cell. The battery cell disclosed in the embodiments of the present application may be used in, but is not limited to, a power consuming device, such as a vehicle, a ship, or an aircraft. A power supply system provided with the power consuming device composed of a battery cell, a battery and the like disclosed in the present application may be used.

The embodiments of the present application provide a power consuming device using a battery as a power supply. The power consuming device may be, but is not limited to, a cell phone, a tablet, a laptop, an electric toy, an electric tool, an electric scooter, an electric vehicle, a ship, a spacecraft, etc. The electric toy may include a stationary or mobile electric toy, such as a game console, an electric vehicle toy, an electric ship toy, and an electric airplane toy. The spacecraft may include an airplane, a rocket, a space shuttle, a spaceship, etc.

Hereinafter, for the convenience of illustration, a vehicle 1000 is taken as an example to describe a power consuming device according to an example of the present application.

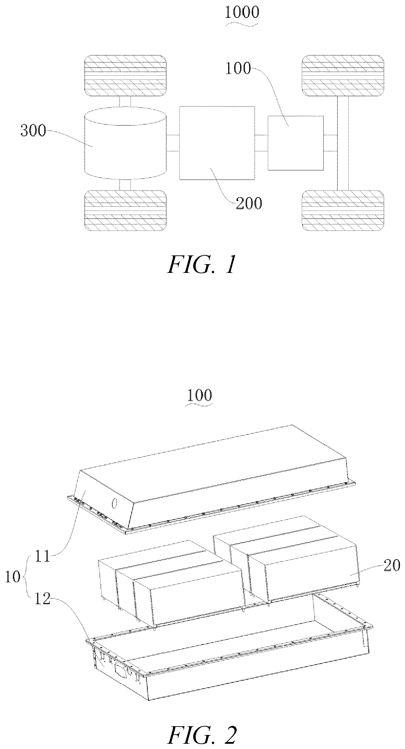

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a battery electric vehicle, a hybrid electric vehicle, or an extended-range vehicle, etc. A battery 100 is provided inside the vehicle 1000, and the battery 100 may be provided at the bottom, the front or the back of the vehicle 1000. The battery 100 may be configured to supply power to the vehicle 1000. For example, the battery 100 may be used as a power supply for operating the vehicle 1000. The vehicle 1000 may further comprise a controller 200 and a motor 300. The controller 200 is configured to control the battery 100 to supply power to the motor 300, for example, to satisfy working power requirements during starting, navigation and traveling of the vehicle 1000.

In some embodiments of the present application, the battery 100 can not only serve as a power supply for operating the vehicle 1000, but also serve as a power supply for driving the vehicle 1000, instead of or in a sealing portion manner instead of fuel or natural gas, to provide driving power for the vehicle 1000.

Referring to FIG. 2, FIG. 2 is an exploded view of the battery 100 according to some embodiments of the present application. The battery 100 comprises a case 10 and a battery cell 20. The battery cell 20 is received in the case 10. The case 10 is configured to provide a receiving space for the battery cell 20, and the case 10 may have various structures. In some embodiments, the case 10 may comprise a first portion 11 and a second portion 12. The first portion 11 and the second portion 12 are fitted to each other in a covered manner, and the first portion 11 and the second portion 12 jointly define the receiving space for receiving the battery cell 20. The second portion 12 may be of a hollow structure with one end open, the first portion 11 may be of a plate-like structure, and the first portion 11 covers an open side of the second portion 12 such that the first portion 11 and the second portion 12 jointly define the receiving space; and The first portion 11 and the second portion 12 may also each be of a hollow structure with one side open, and the open side of the first portion 11 covers the open side of the second portion 12. Of course, the case 10 formed by the first portion 11 and the second portion 12 may be in various shapes, such as a cylinder and a cuboid.

In the battery 100, a plurality of battery cells 20 may be provided. The plurality of battery cells 20 may be in series connection, in parallel connection, or in parallel-series connection. The parallel-series connection means that some of the plurality of battery cells 20 are connected in series and some are connected in parallel. The plurality of battery cells 20 may be directly connected to each other in series or in parallel or in series-parallel, and then a whole body composed of the plurality of battery cells 20 is received in the case 10. Of course, the battery 100 may also be a whole body received in the case 10 that is formed by firstly connecting a plurality of battery cells 20 in series, in parallel or in parallel-series to form a plurality of battery modules, and then connecting the plurality of battery modules in series, in parallel or in parallel-series. The battery 100 may further include other structures. For example, the battery 100 may further comprise a bus component for achieving electrical connections between the plurality of battery cells 20.

Each battery cell 20 may be a secondary battery or a primary battery, and may also be a lithium-sulfur battery, a sodium-ion battery, or a magnesium-ion battery, but is not limited thereto. The battery cell 20 may be in the shape of a cylinder, a flat body, a cuboid, etc.

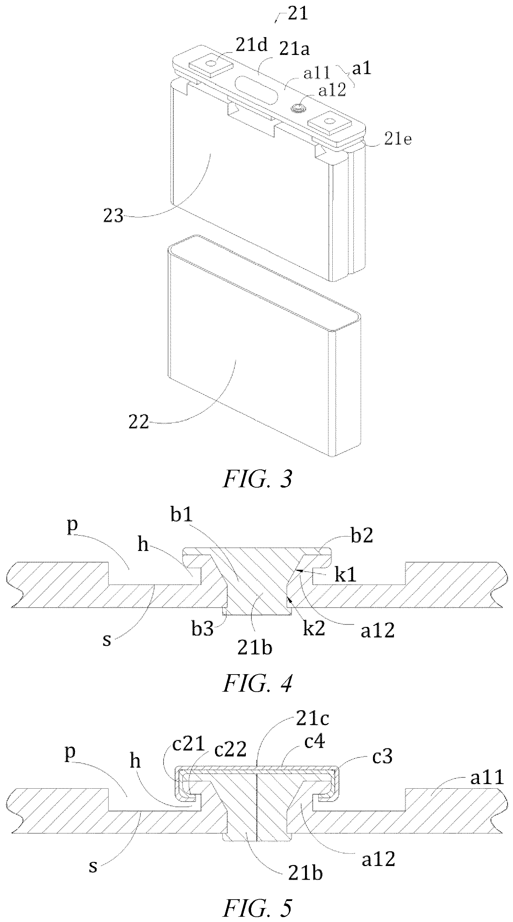

Referring to FIG. 3, FIG. 3 is a schematic exploded view of a structure of the battery cell 20 according to some embodiments of the present application. The battery cell 20 refers to a minimum unit that constitutes a battery. As shown in FIG. 3, the battery cell 20 comprises an end cap assembly 21, a housing 22, an electrode assembly 23 and other functional components.

The end cap assembly 21 refers to a component that covers an opening of the housing 22 to isolate the internal environment of the battery cell 20 from the external environment. Without limitation, the end cap assembly 21 may be shaped to adapt to the shape of the housing 22 to match the housing 22. Without limitation, the end cap assembly 21 may be made of a material (e.g., an aluminum alloy) with a certain hardness and strength. In this way, the end cap assembly 21 is less prone to deformation when subjected to compression and collision, so that the battery cell 20 may have a higher structural strength and the safety performance can also be improved. Functional components, such as an electrode terminal 21d, may be provided on the end cap assembly 21. The electrode terminal 21d may be configured for electrical connection to the electrode assembly 23 for outputting or inputting electric energy of the battery cell 20. In some embodiments, the end cap assembly 21 may also be provided with a pressure relief mechanism for releasing the internal pressure when the internal pressure or temperature of the battery cell 20 reaches a threshold value. The end cap assembly 21 may also be made of various materials, such as copper, iron, aluminum, stainless steel, an aluminum alloy, plastic, etc., which will not be specially limited in the embodiments of the present application. In some embodiments, an insulating member may also be provided on an inner side of the end cap assembly 21, and the insulating member may be used to isolate an electrical connection component in the housing 22 from the end cap assembly 21 to reduce the risk of short circuit. Illustratively, the insulating member may be made of plastic, rubber, etc.

The housing 22 is an assembly configured to cooperate with the end cap assembly 21 to form the internal environment of the battery cell 20. The formed internal environment may be used to receive the electrode assembly 23, an electrolyte, and other components. The housing 22 and the end cap assembly 21 may be separate components, the housing 22 may be provided with an opening, and the internal environment of the battery cell 20 is formed by making the end cap assembly 21 cover the opening at the opening. Without limitation, the end cap assembly 21 and the housing 22 may also be integrated with each other. Specifically, the end cap assembly 21 and the housing 22 may form a common connection face before other components are inserted into the housing. When the interior of the housing 22 needs to be packaged, the end cap assembly 21 then covers the housing 22. The housing 22 may have various shapes and various sizes, for example, in the form of a cuboid, a cylinder, a hexagonal prism, etc. Specifically, the shape of the housing 22 may be determined depending on the specific shape and size of the electrode assembly 23. The housing 22 may be made of various materials, such as copper, iron, aluminum, stainless steel, an aluminum alloy, plastic, etc., which is not particularly limited in the embodiments of the present application.

The electrode assembly 23 is a component where an electrochemical reaction occurs in the battery cell 20. The housing 22 may comprise one or more electrode assemblies 23 therein. The electrode assembly 23 is mainly formed by winding or stacking a positive electrode plate and a negative electrode plate, and a separator is generally arranged between the positive electrode plate and the negative electrode plate. The sealing portions of the positive electrode plate and the negative electrode plate that have an active material form a main body portion of the electrode assembly, and the sealing portions of the positive electrode plate and the negative electrode plate that have no active material each form a tab. A positive electrode tab and a negative electrode tab may be both located at one end of the main body portion or respectively at two ends of the main body portion. During the charging and discharging of the battery, a positive active material and a negative active material react with the electrolyte, and the tabs are connected to the electrode terminals to form a current loop.

FIG. 4 is an assembly diagram of an end cap 21a and a first sealing member 21b in some embodiments of the present application, and FIG. 5 is an assembly diagram of an end cap 21a, a first sealing member 21b, and a second sealing member 21c in some embodiments of the present application.

Referring to FIGS. 4 and 5, according to some embodiments of the present application, the end cap assembly 21 provided by the present application is used for a battery cell 20. The end cap assembly 21 comprises an end cap 21a, a first sealing member 21b and a second sealing member 21c. The end cap 21a comprises a cap body a1. The cap body a1 comprises a cap portion a11 and a filling table a12. The cap portion a11 has a configuration surface s. The configuration surface s faces away from the interior of the battery cell 20, the filling table a12 protrudes from the configuration surface s, and the cap body a1 has a filling hole k penetrating the cap portion a11 and the filling table a12. The first sealing member 21b is blocked in the filling hole k, and the second sealing member 21c has a first sealing portion c1 and a second sealing portion c2 connected to each other. The first sealing portion c1 covers the side of the first sealing member 21b that faces away from the interior of the battery cell 20, the second sealing portion c2 is bent toward the interior of the battery cell 20 relative to the first sealing portion c1, and is sealingly connected to an outer peripheral side wall w of the filling table a12.

In FIGS. 4 and 5, the interior of the battery cell 20 is located below the cap body a1. The cap body a1 is a structure capable of enclosing, together with the housing 22 of the battery cell 20, a sealed space for receiving the electrode assembly 23. The filling hole k is provided in the cap body a1 and is in communication with the inside and outside of the battery cell 20 for filling of an external electrolyte into the battery cell 20. The cap body a1 may be in the shape of a plate, a block, etc., which is not specifically limited.

The cap portion a11 is a structure in the cap body a1 for cooperating with the housing 22 of the battery cell 20 and jointly forming the sealed space for receiving the electrode assembly 23, and may be in the shape of a plate, etc., which is not specifically limited. A side surface of the cap portion a11 that faces away from the interior of the battery cell 20 is the configuration surface s, the filling table a12 is a boss structure protruding from the configuration surface s, and the filling hole k penetrates both the filling table a12 and the cap portion a11. The filling hole k is provided in the cap body a1 and is in communication with the inside and outside of the battery cell 20 for filling of the external electrolyte into the battery cell 20.

The first sealing member 21b refers to a member that can be filled into the filling hole k and block the filling hole k, so as to perform a first sealing on the filling hole k. The first sealing member 21b may completely block the filling hole k, that is, the first sealing member 21b is sealingly connected to the entire hole wall of the filling hole k. The first sealing member 21b may also partially block the filling hole k, that is, the first sealing member 21b is sealingly connected to a part of the hole wall of the filling hole k and blocks the filling hole k. The first sealing member 21b may be in the form of a sealing pin, a sealing column, a sealing plug, etc. Without limitation, the first sealing member 21b is sealingly connected to the filling hole k in an interference fit or in a threaded manner. When the first sealing member 21b is sealingly connected to the filling hole k in a threaded manner, it is possible that a second hole section k2 is provide with an internal thread connected to the first sealing member 21b in a threaded manner. The first sealing member 21b may be a rubber and plastic member, such as rubber and silicone, which is not specifically limited.

The second sealing member 21c may be a member such as a sealing sheet or a sealing plate, which can cover the first sealing member 21b and can also be sealingly connected to the cap body a1, so as to perform a second sealing on the filling hole k. In general, the second sealing member 21c is made of a metal material (e.g., aluminum material), so that it can be welded to the cap body a1 for sealing. Of course, the second sealing member 21c is not limited to metal material, but may also be made of a plastic material when it is glued to the cap body a1 for sealing.

The second sealing portion c2 may be connected to the entire edge of the first sealing portion c1 and is continuously arranged around the first sealing portion c1, or may only be connected to part of the edge of the first sealing portion c1, so that there may be a plurality of second sealing portions c2. The plurality of second sealing portions c2 are arranged at intervals along the edge of the first sealing portion c1. The first sealing portion c1 and the second sealing portion c2 may be formed into an angled structure in advance, or may be bent on site during the second sealing to form an angled structure. The first sealing portion c1 may be integrally connected to the first sealing portion c1.

The outer peripheral side wall w of the filling table a12 refers to the side wall that is continuously arranged around the axial direction of the filling hole k and faces away from the filling hole k. It can be understood that the filling table a12 further has an end wall intersecting with the outer peripheral side wall w and facing away from the interior of the battery cell 20.

After the first sealing member 21b is mounted in the filling hole k, the second sealing member 21c is mounted for second sealing. Specifically, the first sealing portion c1 of the second sealing member 21c first covers the side of the first sealing member 21b that faces away from the interior of the battery cell 20. At this time, the first sealing portion c1 may be attached to the end wall of the filling table a12 (e.g., when the first sealing member 21b does not exceed the range of the filling table a12), and the first sealing portion c1 may also be attached to the part of the first sealing member 21b that extends beyond the filling table a12. Then, the second sealing portion c2 of the second sealing member 21c is bent toward the interior of the battery cell 20 relative to the first sealing portion c1 until it is attached to the outer peripheral side wall w of the filling hole k. Finally, the second sealing member 21c is fixedly connected to the filling table a12 (e.g., by welding and bonding).

In this way, the second sealing member 21c performs a second sealing with the first sealing portion c1 and the second sealing portion c2, the sealing area is large, and the sealing effect is good. Moreover, the first sealing portion c1 and the second sealing portion c2 are bent to form a circuitous sealing path, so that it is possible to reduce the permeation of vaporized electrolyte which will damage a welded position, thereby further improving the sealing effect.

In some embodiments, still referring to FIGS. 4 and 5, the filling table a12 is configured to be provided with a crimping groove h. The crimping groove h is recessed toward the filling hole k in a direction intersecting with a thickness direction F of the cap body a1. The second sealing portion c2 comprises a first crimping section c21 and a second crimping section c22 connected to each other. The first crimping section c21 is connected to the first sealing portion c1 and is bent toward the interior of the battery cell 20 relative to the first sealing portion c1, the first crimping section c21 is sealingly connected to the outer peripheral side wall w of the filling table a12, and the second crimping section c22 is bent toward the filling hole k relative to the first crimping section c21, and is sealingly connected in the crimping groove h.

The crimping groove h is a groove recessed from the outer peripheral side wall w of the filling hole k, and the crimping groove h may be continuously arranged around the axial direction of the filling hole k, or a plurality of crimping grooves may be arranged at intervals around the axial direction of the filling hole k. Of course, it is also possible that only one crimping groove h is provided without surrounding the axial direction of the filling hole k. The recessing direction of the crimping groove h may be in a radial direction of the filling hole k, and of course may form a certain angle with the radial direction of the filling hole k.

The first crimping section c21 is bent toward the interior of the battery cell 20 relative to the first sealing portion c1, and the second crimping section c22 is bent toward the filling hole k relative to the first crimping section c21. The first crimping section c21 and the second crimping section c22 may be directly formed into a bent structure, or may be crimped on site to form a bent structure during second sealing. The second crimping section c22 may be connected to part of the edge of the first crimping section c21, or may be connected to the entire edge of the first crimping section c21.

When the second sealing member 21c is being crimped, the first sealing portion c1 of the second sealing member 21c covers the end wall of the filling table a12 or the part of the first sealing member 21b that extends beyond the filling table a12, the first crimping section c21 is then bent toward the interior of the battery cell 20, the second crimping section c22 is then bent toward the filling hole k and extends into the crimping groove h, and finally the second sealing member 21c is fixed (e.g., welded, or bonded) to the filling table a12.

During specific operations, the second sealing member 21c may be selected as a sealing plate. The sealing plate first covers the end wall of the filling table a12 or the part of the first sealing member 21b that extends beyond the filling table a12, the sealing plate is then bent along the outer peripheral side wall w of the filling table a12, and an end portion of the sealing plate is then bent toward the filling hole k into the crimping groove h. In this case, the part of the sealing plate that covers the end wall of the filling table a12 or the part of the first sealing member 21b that extends beyond the filling table a12 constitutes the first sealing portion c1, and the part of the sealing plate that is attached to the outer peripheral side wall w of the filling table a12 forms the first crimping section c21, and the portion of the sealing plate extending into the crimping groove h forms the second crimping section c22.

In this case, the second sealing member 21c can be sealingly connected to a groove wall of the crimping groove h, part of the outer peripheral side wall w of the filling table a12 and the entire end wall of the filling table a12, so that the sealing area between the filling table a12 and the second sealing member 21c is greatly improved, and the circuitous path formed by the crimping groove h, the outer peripheral side wall w and the end wall improves the sealing effect of the second sealing member 21c. Moreover, the hook-shaped structure formed by the first sealing portion c1, the first crimping section c21 and the second crimping section c22 can also enhance the fixing between the second sealing member 21c and the filling table a12.

In an embodiment, the second sealing member 21c is sealed against an upper side inner wall of the crimping groove h in the thickness direction F, but is not in contact with a lower side inner wall (hereinafter referred to as first wall surface) of the crimping groove h itself in the thickness direction F. In this case, the second sealing member 21c has a larger operating range during crimping, and it is easier to crimp the second sealing member 21c.

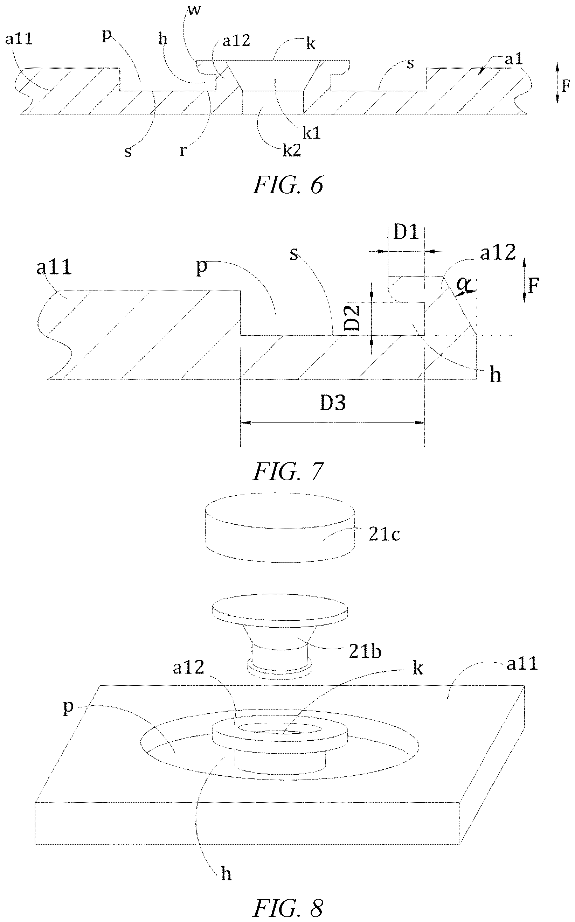

FIG. 6 is a partial cross-sectional view of a cap body a1 according to some embodiments of the present application. FIG. 7 is a partial cross-sectional view of a cap body a1 according to some embodiments of the present application. FIG. 8 is a schematic exploded view of an end cap 21a according to some embodiments of the present application.

Referring to FIGS. 6 and 7, in some embodiments, a side inner wall of the crimping groove h arranged in the thickness direction F and close to the interior of the battery cell 20 is a first wall surface which is flush with the configuration surface s.

In this case, the crimping groove h the crimping groove h can be formed jointly by the boss protruding from the outer peripheral side wall w of the filling table a12 and the configuration surface s without the need for providing a groove, and the formation of the crimping groove h is more convenient.

In some embodiments, referring to FIGS. 6, 7 and 8 together, the cap portion a11 is configured to be provided with an avoidance groove p. The avoidance groove p is recessed toward the interior of the battery cell 20, and a bottom surface of the avoidance groove p is used as the configuration surface s. It can be understood that the avoidance groove p is located on the side of the cap portion a11 that faces away from the battery cell 20, and a filling groove is located in the avoidance groove p. As for the relationship between the depth of the avoidance groove p and the height of the filling table a12, it may or may not be equal, which is not specifically limited.

The arrangement of the avoidance groove p can reduce the protruding height of the filling table a12 or even make same not protrude, so that the influence of the filling table a12 on the outside can be reduced, and the external damage to the filling table a12 can also be avoided. Moreover, hereinafter, when the second sealing member 21c is being bent, the avoidance groove p can provide a large operating space.

In some embodiments, still referring to FIG. 7, a recessed depth of the crimping groove h is a first dimension D1, a width of the crimping groove h in the thickness direction F is a second dimension D2, a side wall of the avoidance groove p that is arranged opposite the groove bottom of the crimping groove h is a first side wall, and a distance between the groove bottom of the crimping groove h and the first side wall in a direction perpendicular to the thickness direction F is a third dimension D3. D1 ≥ 0.5 mm, D2 ≥ 0.5 mm, 2 ≥ D1/D2 ≥ 0.5, and D3 ≥ 3D1.

It can be understood that the side wall of the avoidance groove p and its bottom surface are arranged at an angle. In an example, D1 = 2 mm, D2 = 1.5, and D1/D2 = 4/3. In an example, D3 = 3D1 = 6 mm.

Tests have proved that where the first dimension D1, the second dimension D2 and the third dimension D3 are in the above ranges, when the second sealing member 21c is being crimped, there is a large space for the crimping operation, facilitating the crimping of the second sealing member 21c.

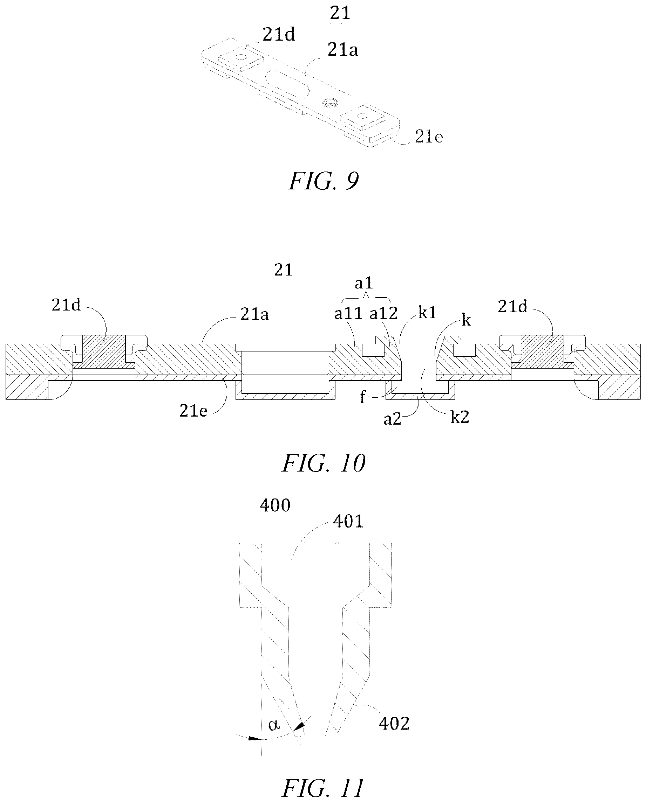

FIG. 9 is a schematic structural diagram of an end cap 21a according to some embodiments of the present application, and FIG. 10 is a cross-sectional view of the end cap 21a shown in FIG. 9.

Referring to FIGS. 9 and 10, in some embodiments, the filling hole k comprises a first hole section k1 and a second hole section k2. The first hole section k1 and the second hole section k2 are provided from top to bottom in the thickness direction F of the cap body a1, and one end of the first hole section k1 and one of the second hole section k2 that are close to each other are in communication with each other. The first sealing member 21b blocks the first hole section k1 and the second hole section k2.

In actual use, the thickness direction F of the cap body a1 corresponds to the vertical direction. By the first hole section k1 and the second hole section k2 being provide from top to bottom, it is meant that the first hole section k1 is in communication with and above the second hole section k2. The first hole section k1 and the second hole section k2 may be arranged coaxially or eccentrically. For the convenience of description, the coaxial arrangement of the first hole section k1 and the second hole section k2 will be taken as an example for illustration, that is, the filling hole k has a central axis arranged in the thickness direction F.

In this case, the blocking effect is better by connecting the first hole section k1 and the second hole section k2 to the first sealing member 21b in a blocked manner.

In some embodiments, the end of the first hole section k1 connected to the second hole section k2 has a diameter smaller than or equal to that of the end of the second hole section k2 connected to the first hole section k1.

The hole wall of the first hole section k1 and the hole wall of the second hole section k2 that are directly connected to each other are respectively a first hole wall and a second hole wall. When the end of the first hole section k1 connected to the second hole section k2 has a diameter greater than that of the end of the second hole section k2 connected to the first hole section k1, an inner step structure is formed between the first hole wall and the second hole wall. When flowing over the inner step structure, the electrolyte is easy to remain at the inner step structure, and cannot flow smoothly from the first hole section k1 to the second hole section k2. In the embodiments of the present application, the end of the first hole section k1 connected to the second hole section k2 has a diameter smaller than or equal to that of the end of the second hole section k2 connected to the first hole section k1, so that it is possible to prevent the electrolyte from stagnating at the inner step, and the electrolyte can flow from the second hole section k2 to the first hole section k1 without hindrance.

To enable the electrolyte to flow smoothly from the first hole section k1 to the second hole section k2, the configuration of the first hole section k1 and the second hole section k2 can exclude the following: when the first hole wall is perpendicular to the central axis of the filling hole k, the inner step structure formed by the hole wall other than the first hole wall and the first hole wall in the first hole section k1; when the first hole wall is inclined from bottom to top relative to the central axis of the filling hole k, the inner step structure formed by the hole wall other than the first hole wall and the first hole wall in the first hole section k1; and when the first hole wall extends from top to bottom, a recessed groove/hole structure configured on the first hole wall and recessed from top to bottom, etc. Any structure that can prevent the electrolyte from flowing from the first hole section k1 to the second hole section k2 can be called a circuitous structure, and the specific configuration thereof is not limited here.

That is, to enable the electrolyte to flow smoothly from the first hole section k1 to the second hole section k2, the entire hole wall of the first hole section k1 extends from top to bottom. Specifically, the hole wall of the first hole section k1 may be configured to extend from top to bottom as a vertical/inclined wall, or may be configured to extend from top to bottom as an arc-shaped wall, or may be configured to extend from top to bottom as a wave-shaped wall, as long as there is no structure in which the electrolyte stagnates, and the electrolyte can flow smoothly into the second hole section k2 along the hole wall of the first hole section k1 under its own weight.

In this case, the electrolyte can flow from the second hole section k2 to the first hole section k1 without hindrance, so that the residue of the electrolyte can be reduced, and the influence of the vaporized electrolyte on the welding position of the second sealing member 21c can be then reduced, facilitating the improvement of the sealing reliability of the second sealing member 21c.

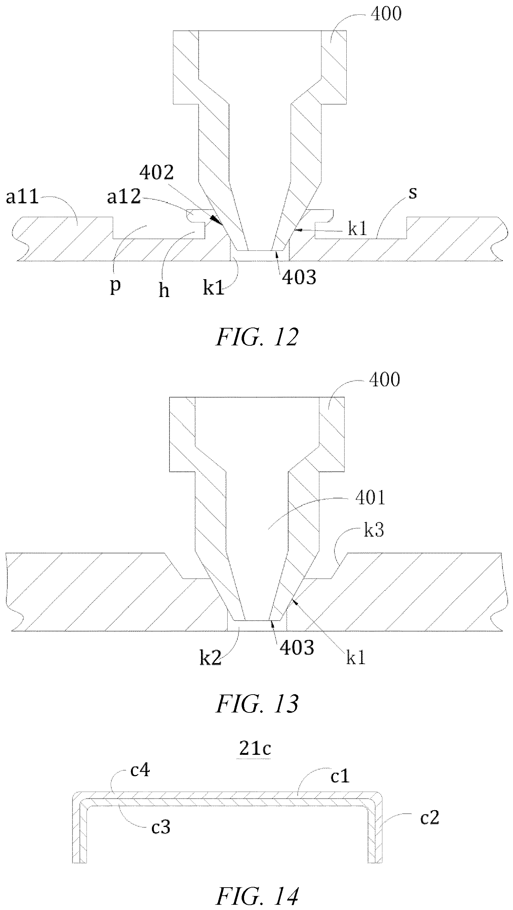

FIG. 11 is a schematic structural diagram of a filling nozzle 400 for use with an end cap 21a according to some embodiments of the present application. FIG. 12 is a schematic diagram of an end cap 21a in a filling state according to some embodiments of the present application.

In some embodiments, the first hole section k1 is configured to receive the filling nozzle 400, and at least part of the hole wall is attached to an outer wall (e.g., a mating surface 402) of the filling nozzle 400 and is configured to form an anti-overflow area. The anti-overflow area is located above a filling port 403 in the filling nozzle 400.

Referring to FIGS. 11 and 12, the filling nozzle 400 refers to a component that can be connected to an electrolyte supply source and has a filling port 403 for allowing the electrolyte to flow from the interior thereof to the filling hole k. The filling port 403 serves as the output position of the filling nozzle 400 and is connected to the interior of the filling nozzle 400 for filling, the filling nozzle 400 is configured to be provided with a flow channel 401 for communicating the electrolyte supply source with the filling hole k, and the filling port 403 is located at an outlet of the flow channel 401.

In an actual filling operation, the filling nozzle 400 is at least partially received in the first hole section k1, and the filling nozzle 400 is attached to at least part of the hole wall of the first hole section k1 to form an anti-overflow area, and the filling port 403 of the filling nozzle 400 is located below the anti-overflow area.

It can be understood that the hole wall (e.g., the mating surface 402) of the first hole section k1 that is attached to the filling nozzle 400 is continuously arranged around the central axis of the filling hole k, so that the filling nozzle 400 is tightly connected to the hole wall attached to same, so as to form an anti-overflow area to prevent the electrolyte flowing out from the filling port 403 from flowing upward through a gap between the filling nozzle 400 and the hole wall and leaking to the outside of the anti-overflow area.

In this case, the electrolyte flowing out from the filling nozzle 400 is completely blocked below by the anti-overflow area and cannot overflow to the outside of the anti-overflow area, so that it is possible that the electrolyte flow out through the filling nozzle 400 completely flows smoothly through the second hole section k2 into the battery cell 20 without remaining in the filling hole k. In this way, it is possible to further avoid welding defects at the welding position of the sealing pin due to vaporization of the electrolyte remaining in the filling hole k, thereby avoiding the problem of reduced sealing reliability of the filling hole k caused by the welding defects.

Referring to FIG. 12, in some embodiments, the hole wall of the first hole section k1 is completely attached to the outer wall (e.g., the mating surface 402) of the filling nozzle 400, and the filling port 403 of the filling nozzle 400 extends into the second hole section k2.

By "completely attached" means that the entire hole wall of the first hole section k1 is attached to the outer wall (e.g., the mating surface 402) of the filling nozzle 400.

In this case, the anti-overflow area formed by the first hole section k1 and the filling nozzle 400 is relatively large, and the anti-overflow effect is good. Moreover, the filling port 403 of the filling nozzle 400 directly extends into the second hole section k2, and the electrolyte is discharged from the filling port 403 and then directly enters the second hole section k2, so that the time for the electrolyte to enter the battery cell 20 can be shortened, and the electrolyte can also be prevented from remaining on the hole wall of the first hole section k1.

Of course, in other embodiments, it is also possible that part of the hole wall of the first hole section k1 is attached to the outer wall (e.g., the mating surface 402) of the filling nozzle 400, and the filling nozzle 400 extends into the first hole section k1.

Specifically, in an embodiment, the filling port 403 of the filling nozzle 400 is arranged downward, so that the electrolyte can flow directly toward the interior of the battery cell 20. Of course, it is also possible that the filling port 403 of the filling nozzle 400 is arranged at the side wall of the filling nozzle 400 and is formed toward the hole wall of the first hole section k1 or the hole wall of the second hole section k2. In this case, part of the electrolyte will flow along the hole wall of the first hole section k1 and/or the second hole section k2 into the battery cell 20.

In an embodiment, the diameter of the second hole section k2 is the same everywhere, so that the electrolyte will not remain on the hole wall of the second hole section k2, and the first sealing member 21b is mounted more conveniently. Of course, it is also possible that the diameter of the second hole section k2 gradually increases from top to bottom, or take other forms, as long as the electrolyte is less likely to remain.

In some embodiments, still referring to FIGS. 10 and 6, the first hole section k1 has a diameter decreasing gradually from top to bottom, the end of the second hole section k2 that is connected to the first hole section k1 is a first interface end, and the first interface end has a diameter equal to or greater than the minimum diameter of the first hole section k1.

The situation that the first hole section k1 has a diameter decreasing gradually from top to bottom includes: the hole wall of the first hole section k1 is an inclined wall with a gradually decreasing diameter, the hole wall of the first hole section k1 is in the form of an arc-shaped wall with a gradually decreasing diameter, etc. When the diameter of the first hole section k1 gradually decreases from top to bottom, no circuitous structure will be formed, the electrolyte can flow downward smoothly under its own weight.

The minimum diameter of the first hole section k1 is the diameter of the end of the first hole section k1 connected to the second hole section k2. The end of the second hole section k2 connected to the first hole section k1 is the first interface end. When the diameter of the first interface end is equal to the minimum diameter of the first hole section k1, the end of the second hole section k2 and the end of the first hole section k1 that are opposite each other coincide with each other. When the diameter of the first interface end is greater than the minimum diameter of the first hole section k1, the electrolyte flowing from the first hole section k1 to the second hole section k2 can flow directly toward the interior of the battery cell 20, so that it is possible to reduce the probability of the electrolyte flowing along the hole wall of the second hole section k2 and improve the filling efficiency of the electrolyte.

Of course, under normal circumstances, the diameter of the first interface end is set to be equal to the minimum diameter of the first hole section k1, thereby forming a filling hole k with a large top and a small bottom, which is more convenient for the mounting of the first sealing member 21b.

In this case, when the diameter of the first hole section k1 gradually decreases from top to bottom, no circuitous structure will be formed, the electrolyte can flow downward smoothly under its own weight, and the electrolyte flowing from the first hole section k1 to the second hole section k2 can flow directly toward the interior of the battery cell 20, so that it is possible to reduce the probability of the electrolyte flowing along the hole wall of the second hole section k2 and improve the filling efficiency of the electrolyte.

The first sealing member 21b mentioned in the embodiments of the present application is the sealing member used during the first sealing of the filling hole k, and the second sealing member 21c is the sealing member used during the second sealing of the filling hole k.

FIG. 13 is a schematic diagram of an end cap 21a in a filling state according to some other embodiments of the present application.

In some embodiments, referring to FIG. 13, the filling hole k further comprises a third hole section k3, and the first hole section k1 communicates between the third hole section k3 and the second hole section k2. The end of the third hole section k3 connected to the first hole section k1 is a second interface end, and the second interface end has a diameter equal to or greater than the maximum diameter of the first hole section k1.

The third hole section k3 may be used as a hole section that mates with the first sealing member 21b, or may be used as a hole section that mates with the second sealing member 21c, which is not specifically limited. The end of the third hole section k3 connected to the first hole section k1 is the second interface end. The diameter of the second interface end is greater than or equal to the maximum diameter of the first hole section k1, facilitating the use of the sealing pin and the filling nozzle 400.

In this case, during the second sealing of the filling hole k, the second sealing member 21c may be received in the third hole section k3, so that the second sealing member 21c can be prevented from being exposed outside the cap body a1, which is neither attractive nor likely to scratch the outside.

FIG. 7 is a partial cross-sectional view of a cap body a1 according to some embodiments of the present application. In some embodiments, referring to FIG. 7, an included angle between a hole wall of the first hole section k1 and the thickness direction F of the cap body a1 is a first included angle α, where 0° ≤ α ≤ 45°. Specifically, the first included angle α may be 5°, 10°, 15°, 20°, 25°, 30°, 35°, 40°, 45°, etc.

In this case, the hole wall of the first hole section k1 is an inclined straight wall, which is convenient for machining. Moreover, when the first included angle α is in the range of 0° to 45°, the resistance of the hole wall of the first hole section k1 to the electrolyte is small, so that the electrolyte entering the first hole section k1 is easy to flow smoothly to the second hole section k2 under its own weight, to prevent the electrolyte from sticking to the hole wall of the first hole section k1.

It can be understood that, referring to FIG. 11, to cause the filling nozzle 400 to be attached to the first hole section k1, there is also an angle of α between part of the outer wall of the filling nozzle 400 extending into the filling hole k and the thickness direction F of the cap body a1.

In an embodiment, still referring to FIG. 6, the first hole section k1 is formed in the filling table a12, and the second hole section k2 is formed in the cap portion a11. In an actual operation, the first hole section k1 and the second hole section k2 may be machined and designed according to the height of the filling table a12 and the thickness of the cap portion a11. The size of the filling hole k is more accurately machined, and the size of the filling hole k is designed more conveniently.

Of course, in other embodiments, the formation forms of the first hole section k1 and the second hole section k2 are not limited thereto. For example, it is also possible that the first hole section k1 is formed in the filling table a12, and the second hole section k2 is formed in both the filling table a12 and the cap portion a11. For another example, the second hole section k2 is formed in the cap portion a11, and the first hole section k1 is formed in both the filling table a12 and the cap portion a11.

In some embodiments, referring to FIG. 10, the end cap 21a further comprises a baffle a2. The baffle a2 is arranged on the side of the cap body a1 that faces the interior of the battery cell 20, and obstructs a flow path in which the electrolyte flows directly from the filling hole k to the interior of the battery cell 20.

The baffle a2 is fixedly or integrally connected to the cap body a1, and the cap body a1 is used to make the baffle a2 have an effect of resisting the impact of the electrolyte. The baffle a2 obstructs the flow path in which the electrolyte flows directly from the filling hole k to the interior of the battery cell 20. that is, the electrolyte cannot flow directly from the filling hole k to the battery cell 20 under the action of the baffle, but changes the flow direction when passing by the baffle a2 and then enters the interior of the battery cell 20.

Specifically, the baffle a2 is arranged opposite the filling hole k. In the thickness direction F, the orthographic projection of the filling hole k is located within the range of the orthographic projection of the baffle. The electrolyte flowing out from the filling hole k flows toward the baffle a2 under the force of gravity, then changes the flow direction under the obstruction of the baffle a2, and then enters the interior of the battery cell 20.

It should be noted that, in this case, a buffer space f in communication with the filling hole k and the interior of the battery cell 20 is formed between the baffle a2 and the cap body a1, and an outlet of the buffer space f does not directly face the electrode assembly 23 inside the battery cell 20, so that the fast-flowing electrolyte can be prevented from directly impacting on the electrode assembly 23 and damaging the electrode assembly 23.

FIG. 14 is a state diagram of a second sealing member 21c according to some embodiments of the present application.

In some embodiments, referring to FIGS. 5 and 14, the second sealing member 21c comprises a hot-melt layer c3 and a heat-conducting layer c4 that are laminated. The hot-melt layer c3 is located between the heat-conducting layer c4 and the cap body a1, and hot-melt layer c3 is configured to be capable of being melted when heated to sealingly connect the heat-conducting layer c4 to the cap body a1.

The hot-melt layer c3 refers to a layer structure that can be melted when the ambient temperature rises and hardened and adhesively bonds the heat-conducting layer c4 to the cap body a1 when being cooled. The hot-melt layer c3 may be a hot-melt adhesive film layer made of a thermoplastic adhesive material with a low melting temperature (e.g., polypropylene, ethylene-vinyl acetate copolymer (EVA), polyamide (PA), polyolefin, or polylactic acid).

The heat-conducting layer c4 is a material layer with thermal conductivity, which may be but not limited to a metal layer (e.g., an aluminum layer, or a stainless steel layer), and a ceramic layer (e.g., aluminum oxide, or silicon oxide). Without limitation, the heat-conducting layer c4 has a certain toughness to facilitate bending.

After the covering of the second sealing member 21c is completed (if bending is required, after the first crimping section c21 and the second crimping section c22 are formed after bending), the heat-conducting layer c4 is heated, and the heat of the heat-conducting layer c4 is transferred to the hot-melt layer c3 and melt the hot-melt layer c3, the melted hot-melt material has a certain fluidity and can fill the space between the heat-conducting layer c4 and the filling table a12 (and/or the first sealing member 21b), realizing effective sealing and effective fixing of the second sealing member 21c.

In this case, the hot-melt layer c3 is used to bond the heat-conducting layer c4 to the filling table a12 (and/or the first sealing member 21b), and the hot-melt layer has a hot-melt temperature much lower than the high temperature generated during welding, so the vaporization of the electrolyte can be alleviated or even avoided, thereby avoiding the problems of reducing the bonding strength and affecting the sealing effect due to the vaporized electrolyte penetrating the hot-melt layer c3.

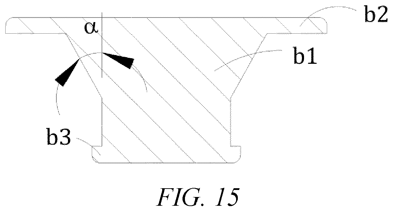

FIG. 15 is a schematic structural diagram of a first sealing member 21b according to some embodiments of the present application.

In some embodiments, referring to FIGS. 4 and 15 together, the first sealing member 21b comprises a main body portion b1 and a positioning portion b2 adjacent to each other in the thickness direction F. The main body portion b1 is sealingly fitted in the filling hole k, and the positioning portion b2 is located outside the filling hole k and is lap-jointed to the surface of the cap body a1 that faces away from the interior of the battery cell 20. The first sealing portion c1 sealingly covers the positioning portion b2.

For the introduction of the main body portion b1 and the positioning portion b2, reference can be made to the description in the above embodiments, and details are not repeated here.

When mounting the first sealing member 21b, its main body portion b1 first extends into the filling hole k and blocks the filling hole k. With the continuous sinking of the main body portion b1, the positioning portion b2 gradually approaches the cap body a1 (which, specifically, may be the end wall of the filling). When the positioning portion b2 is lap-jointed to the cap body a1 (which, specifically, may be the end wall of the filling table a12), the main body portion b1 sinks in place, and at this time the first sealing member 21b is mounted in place.

In this way, it is possible to determine whether the first sealing member 21b is mounted in place according to whether the positioning portion b2 is lap-jointed to the cap body a1, so that the first sealing member 21b is mounted more conveniently.

In some embodiments, still referring to FIGS. 4 and 15, the first sealing member 21b further comprises a limiting portion b3 located outside the filling hole k, the main body portion b1 is connected between the limiting portion b3 and the positioning portion b2, and the limiting portion b3 abuts against the surface of the cap body a1 that faces the interior of the battery cell 20.

For the limiting portion b3, reference can be made to the description in the above embodiments, and details are not repeated here.

In this case, after being mounted in place, the first sealing member 21b is limited on the cap body a1 by means of the positioning portion b2 and the limiting portion b3 thereof, so that it is possible to effectively prevent the first sealing member 21b from falling off.

In an embodiment of the present application, the end cap assembly 21 comprises an end cap 21a, a first sealing member 21b and a second sealing member 21c. The end cap 21a comprises a cap body a1. The cap body a1 comprises a cap portion a11 and a filling table a12. The filling table a12 protrudes from a configuration surface s of the cap portion a11 that faces away from the interior of the battery cell 20, and a filling hole k penetrating the cap portion a11 and the filling table a12 is provided. The filling table a12 is configured to be provided with a crimping groove h which is recessed toward the filling hole k in a direction intersecting with a thickness direction F of the cap body a1. The first sealing member 21b is blocked in the filling hole k, and the second sealing member 21c has a first sealing portion c1 and a second sealing portion c2 connected to each other. The first sealing portion c1 covers the side of the first sealing member 21b that faces away from the interior of the battery cell 20. The second sealing portion c2 comprises a first crimping section c21 and a second crimping section c22. The first crimping section c21 is connected to the first sealing portion c1, and is bent toward the interior of the battery cell 20 relative to the first sealing portion c1. The first crimping section c21 is sealingly connected to an outer peripheral side wall w of the filling table a12. The second crimping section c22 is bent toward the filling hole k relative to the first crimping section c21, and is sealingly connected in the crimping groove h.

In another aspect, the present application also provides a battery cell 20, comprising a housing 22, an electrode assembly 23, and an end cap assembly 21 in any one of the above embodiments. The housing 22 encloses a receiving cavity having an opening, the electrode assembly 23 is received in the receiving cavity, and the end cap 21a covers the opening.

In still another aspect, the present application also provides a battery 100, comprising a battery cell 20 in the above embodiment.

In yet another aspect, the present application also provides a power consuming device, comprising a battery 100 in the above embodiment. The battery 100 is configured to supply electric energy.

The various technical features of the above embodiments can be combined in any manner, and in order to simplify the description, not all possible combinations of the various technical features of the above embodiments are described. However, the technical features should be considered to be within the scope of the description in the specification, as long as there is no conflict between the combinations of the technical features.

The embodiments described above merely illustrate several implementations of the present application and are described relatively specifically and in detail, but should not be construed as limiting the patent scope of the present application. It should be noted that several variations and improvements may also be made by those of ordinary skill in the art without departing from the concept of the present application, and should fall within the scope of protection of the present application. Therefore, the scope of protection of the present application shall be defined by the appended claims.

## Claims

1. An end cap assembly for a battery cell, the end cap assembly comprising:
an end cap, comprising:
a cap body comprising a cap portion and a filling table, wherein the cap portion has a configuration surface facing away from the interior of the battery cell, the filling table protrudes from the configuration surface, and the cap body has a filling hole penetrating the cap portion and the filling table;
a first sealing member blocked in the filling hole; and
a second sealing member having a first sealing portion and a second sealing portion connected to each other, wherein the first sealing portion covers the side of the first sealing member that faces away from the interior of the battery cell, and the second sealing portion is bent toward the interior of the battery cell relative to the first sealing portion, and is sealingly connected to an outer peripheral side wall of the filling table.

2. The end cap assembly according to claim 1, wherein the filling table is configured to be provided with a crimping groove which is recessed toward the filling hole in a direction intersecting with a thickness direction of the cap body;
wherein the second sealing portion comprises a first crimping section and a second crimping section connected to each other, the first crimping section is connected to the first sealing portion and is bent toward the interior of the battery cell relative to the first sealing portion, and the first crimping section is sealingly connected to the outer peripheral side wall of the filling table; and
the second crimping section is bent toward the filling hole relative to the first crimping section, and is sealingly connected in the crimping groove.

3. The end cap assembly according to claim 2, wherein a side inner wall of the crimping groove arranged in the thickness direction and close to the interior of the battery cell is a first wall surface which is flush with the configuration surface.

4. The end cap assembly according to claim 2 or 3, wherein the cap portion is configured to be provided with an avoidance groove which is recessed toward the interior of the battery cell, a bottom surface of the avoidance groove being used as the configuration surface.

5. The end cap assembly according to claim 4, wherein a recessed depth of the crimping groove is a first dimension D1, a width of the crimping groove in the thickness direction is a second dimension D2, a side wall of the avoidance groove that is arranged opposite a groove bottom of the crimping groove is a first side wall, and in a direction perpendicular to the thickness direction, a distance between the groove bottom of the crimping groove and the first side wall is a third dimension D3;
where D1 ≥ 0.5 mm, D2 ≥ 0.5 mm, 2 ≥ D1/D2 ≥ 0.5, and D3 ≥ 3D1.

6. The end cap assembly according to any one of claims 1 to 5, wherein the filling hole comprises a first hole section and a second hole section, wherein the first hole section and the second hole section are provided from top to bottom in the thickness direction of the cap body; one end of the first hole section and one of the second hole section that are close to each other are in communication with each other; and
the first sealing member blocks the first hole section and the second hole section.

7. The end cap assembly according to claim 6, wherein the first hole section has a diameter decreasing gradually from top to bottom, the end of the second hole section that is connected to the first hole section is a first interface end, and the first interface end has a diameter equal to or greater than the minimum diameter of the first hole section.

8. The end cap assembly according to claim 7, wherein an included angle between a hole wall of the first hole section and the thickness direction of the cap body is a first included angle α, where 0° ≤ α ≤ 45°.

9. The end cap assembly according to any one of claims 1 to 8, wherein the end cap further comprises a baffle, the baffle being arranged on the side of the cap body that faces the interior of the battery cell, and obstructing a flow path in which an electrolyte flows directly from the filling hole to the interior of the battery cell.

10. The end cap assembly according to any one of claims 1 to 9, wherein the second sealing member comprises a hot-melt layer and a heat-conducting layer that are laminated, wherein the hot-melt layer is located between the heat-conducting layer and the cap body, and hot-melt layer is configured to be capable of being melted when heated to sealingly connect the heat-conducting layer to the cap body.

11. The end cap assembly according to any one of claims 1 to 10, wherein the first sealing member comprises a main body portion and a positioning portion adjacent to each other in the thickness direction of the cap body, wherein the main body portion is sealingly fitted in the filling hole, and the positioning portion is located outside the filling hole and is lap-jointed to the surface of the cap body that faces away from the interior of the battery cell; and
the first sealing portion sealingly covers the positioning portion.

12. The end cap assembly according to claim 11, wherein the first sealing member further comprises a limiting portion located outside the filling hole, the main body portion is connected between the limiting portion and the positioning portion, and the limiting portion abuts against the surface of the cap body that faces the interior of the battery cell.

13. A battery cell, comprising:
a housing for enclosing a receiving cavity having an opening;
an electrode assembly received in the receiving cavity; and
an end cap assembly of any one of claims 1 to 12, wherein the end cap covers the opening.

14. A battery, comprising a battery cell of claim 13.

15. A power consuming device, comprising a battery of claim 14, the battery being configured to supply electric energy.
